# EUROPÄISCHE PATENTSCHRIFT

(11) **EP 3 686 008 B1**
(45) Veröffentlichungstag und Bekanntmachung des Hinweises auf die Patenterteilung: **23.06.2021**
(21) Anmeldenummer: 19153170.6
(22) Anmeldetag: 23.01.2019
(51) Int. Cl.: B32B 33/00, B32B 9/00, E04F 15/02, B29C 48/07

(54) **VERFAHREN ZUR HERSTELLUNG EINES ABRIEB- UND WASSERFESTEN MEHRLAGIGEN PANEELS UND EIN MIT DIESEM VERFAHREN HERGESTELLTES PANEEL**
METHOD FOR PRODUCING AN ABRASION-RESISTANT AND WATERPROOF MULTILAYER PANEL AND A PANEL OBTAINED WITH SAID METHOD
PROCÉDÉ DE FABRICATION D'UN PANNEAU MULTICOUCHE RÉSISTANT À L'ABRASION ET À L'EAU ET PANNEAU FABRIQUÉ SELON LEDIT PROCÉDÉ

(43) Veröffentlichungstag der Anmeldung: 29.07.2020
(73) Patentinhaber: Flooring Technologies Ltd., Kalkara SCM1001 (MT)
(72) Erfinder: Dr. Kalwa, Norbert, 32805 Horn-Bad Meinberg (DE)
(74) Vertreter: Maikowski & Ninnemann Patentanwälte Partnerschaft mbB

(56) Entgegenhaltungen:
- CN-U- 207 449 270
- US-A1- 2016 016 390
- US-A1- 2018 339 504

## Beschreibung

Die vorliegende Erfindung betrifft ein Verfahren zur Herstellung eines abriebfesten und wasserfesten mehrlagigen Paneels, ein mit diesem Verfahren hergestelltes Paneel und eine Produktionslinie zur Durchführung dieses Verfahrens.

Als Fußbodenbeläge werden derzeit hauptsächlich Keramikfliesen, Holzbeläge (wie Parkettböden), Laminat, PVC-Beläge aber auch textile Auslegware (wie Teppich) verwendet. Fußbodenbeläge aus PVC werden häufig im öffentlichen und kommerziellen Orten, aber auch im Heimbereich aufgrund der widerstandsfähigen Eigenschaften, des leichten Einbaus und günstigen Kosten bevorzugt.

Bodenbeläge auf der Basis von PVC werden in mehrere Kategorien und Unterkategorien eingeteilt. Hierbei unterscheidet man insbesondere zwischen traditionellen PVC- Belägen und den sogenannten LVT (Luxury Vinyl Tile) - Belägen.

Traditionelle PVC-Beläge verwenden im wesentlichen PVC als Basismaterial mit Weichmachern, wodurch ein flexibles Produkt erhalten wird, dass in einfacher Weise bedruckt und auf einen Boden gelegt werden kann. Traditionelle PVC-Produkte gehören zu den kostengünstigsten Fußboden-Belägen, die derzeit erhältlich sind.

Die LVT-Produkte umfassen u.a. PVC-Beläge und mehrschichtige Fußbodenbeläge, die einen harten Kern aufweisen und wiederum in zwei Klassen unterschieden werden. Dazu gehören zum einen die WPC-Produkte (WPC = wood plastic composites or waterproof plastic composites), die ursprünglich als Kernlage eine Schicht aus einer Holz-Kunststoff-Mischung umfassen. Neben dem Einsatz von Holz zur Kostenreduzierung kann auch das Aufschäumen des Trägers eine Alternative darstellen. sein

Zum anderen gehören zu den mehrschichtigen PVC-Fußbodenbelägen die SPC-Beläge, dessen Kernlage aus einem Kunststoffanteil (meist PVC) und einem größeren Anteil an Mineralien besteht. Aufgrund des größeren Mineralanteils ist die Steifheit, das Gewicht und die Dichte höher.

Die Herstellung von SPC-Bodenbelägen (SPC = stone plastic composite) nimmt in den letzten Jahren mengenmäßig stark zu. Dabei besteht das Produkt im einfachsten Fall aus einem Träger, einer Dekorschicht und einer Verschleißschicht.

Der Träger besteht aus einem hochgefüllten thermoplastischen Kunststoff, wie Polyvinylchlorid oder Polypropylen, wobei als Füllstoffe üblicherweise Kreide oder Talkum verwendet werden. Die Dekorschicht ist meist eine bedruckte, thermoplastische Folie, die als Materialbasis ebenfalls PVC oder PP besitzt. Die Verschleißschicht ist im einfachsten Fall eine transparente, thermoplastische Folie (PVC oder PP).

Bei der Herstellung wird zunächst in einem Extruder der Träger hergestellt und direkt im Anschluss daran werden die Dekor- und die Verschleißfolie aufkalandriert. Die Oberflächenstruktur des Produktes wird durch die Strukturierung des Kalanders erzeugt. Je höher die gewünschte Verschleißklasse sein soll, umso dicker muss die Verschleißfolie sein. Dies führt nicht nur zu Kostennachteilen, sondern auch bei den höheren Verschleißklassen zu Transparenzproblemen.

Die Produkte auf die sich die bisher bekannte Technologie bezieht entsprechen z. B. den in der DIN EN 16511:2015 "Paneele für schwimmende Verlegung - Halbstarre, mehrlagige, modulare Bodenbeläge (MMF) mit abriebbeständiger Decklage" oder der ISO 10582:2017 "Heterogenous poly(vinylchloride) floor coverings - Specifications" beschriebenen Anforderungen. In diesen Normen sind Produkte beschrieben, die ihre Verschleißfestigkeit im Wesentlichen über die Schichtdicke der Nutzungsschicht sicherstellen. In der ISO 10582 wird z. B. für die Nutzungsklasse 34 eine Nutzschichtdicke von mindestens 0,8 mm gefordert. Die Ursache für diese hohe Foliendicke liegt dabei darin begründet, dass die Verschleißfestigkeit von ungefüllten PVC-Folien bekannt ist und damit Anforderungen nicht mehr über die konkrete Prüfung definiert werden. Derartige Schichtstärken der Nutzschicht reduzieren insbesondere bei dunklen Dekoren den Farbeindruck. Zudem wirkt der Druck durch die dicke transparente Schicht mehr und mehr kunststoffartig.

Zur Lösung dieser Probleme wird z. B. in der US 2018/0339504 A1 oder WO 2018/217158 A1 das Aufbringen einer dublierten Folie auf einen Träger beschrieben, wobei zwischen den beiden Folien abriebhemmende Partikel eingelagert sind. Die Herstellung der dublierten Folie mit den eingelagerten abriebfesten Partikeln wird in einer separaten Produktionslinie durchgeführt und die dublierte abriebfeste Folie wird vor Weiterverarbeitung typischerweise zwischengelagert. Die dublierte Folie wird dann auf einen Träger (z.B. ein PVC-Trägermaterial) aufgepresst oder aufkalandriert. Auch hier wird durch die Verwendung von zwei Folien als Verschleißschicht kein kostenoptimales Ergebnis erreicht.

Die bisher bekannten Ansätze zur Herstellung von abrieb- und wasserfesten Paneelen führen zu Produkten mit schlechter Transparenz und aufgrund des aufwändigen Herstellungsprozesses zu höheren Kosten.

Der vorliegenden Erfindung liegt daher die technische Aufgabe zu Grunde ein Verfahren zur Herstellung eines SPC-Fußbodenbelages bereitzustellen, bei dem die Verschleißschicht effizienter erzeugt wird. Dabei sollen sich die technischen Eigenschaften nicht verschlechtern und auch keine anderweitigen Produktverschlechterungen auftreten. Auch die Produktivität der Produktionslinie soll durch das Verfahren nicht beeinträchtigt werden.

Die gestellte Aufgabe wird erfindungsgemäß durch ein Verfahren mit den Merkmalen des Anspruchs 1, ein mit diesem Verfahren hergestelltes Paneel mit den Merkmalen des Anspruchs 13 und eine Produktionslinie mit den Merkmalen des Anspruchs 14 gelöst. Demnach wird ein Verfahren zur Herstellung eines abrieb- und wasserfesten mehrlagigen Paneels, insbesondere eines abrieb- und wasserfesten Fußbodenpaneels, bereitgestellt, welches die folgenden Schritte umfasst:
- Bereitstellen von mindestens einer Kunststoffträgerplatte,
- Aufbringen von mindestens einer Dekorschicht auf die mindestens eine Kunststoffträgerplatte;
- Aufbringen von mindestens einer Primerschicht aus Polyurethan auf die mindestens eine Dekorschicht, wobei der Polyurethan-Primer in einer Menge von 10 g/m² oder von 15 g/m² flüssig aufgewalzt oder aufgesprüht wird;-gleichmäßiges Aufstreuen von abriebfesten Partikeln auf die mindestens eine auf der Dekorschicht aufgebrachten Primerschicht; und
- Aufbringen von mindestens einer Abdeckschicht.

Das vorliegende Verfahren ermöglicht demnach die Bereitstellung eines abrieb- und wasserfesten mehrlagigen Paneels in verschiedenen Formaten mit hoher Verschleißfestigkeit in kostengünstiger Weise. Die abriebfesten Partikel werden dabei unmittelbar auf die Dekorschicht unter Ausbildung einer abriebfesten Lage aufgestreut, auf welche wiederum eine Abdeckschicht aufgebracht wird. Eine weitere, in einem separaten Produktionsschritt hergestellte Zwischenlage, in welche die abriebfesten Partikel eingebettet sind (wie in der WO 2018/217158 A1 beschrieben), ist nicht notwendig.

In einer Variante, die später noch im Detail beschrieben wird, wird Korundpulver als abriebfestes Material auf die Dekorfolie gestreut mit anschließender Abdeckung durch eine dünne, transparente, thermoplastische Folie oder einen Lackaufbau. Dabei kann zur besseren Fixierung der Korundpartikel auf die Dekorfolie ein Primer aufgebracht werden, der auch die Haftung der später aufgebrachten Schichten (Folie oder Lack) verbessern kann. Damit können auch Produkte für höhere Verschleißklassen mit einer "dünneren" Verschleißschicht hergestellt werden, was zu einer deutlichen Verbesserung der Transparenz führt. Zusätzlich erfolgt natürlich auch eine Materialeinsparung.

In einer Ausführungsvariante des vorliegenden Verfahrens wird die Kunststoffträgerplatte als Endlosstrang bereitgestellt und nach der Beschichtung auf Format geschnitten.

Die Kunststoffträgerplatte (bzw. der SPC-Kern) kann aus verschiedenen thermoplastischen Kunststoffen, wie Polyvinylchlorid (PVC) oder Polypropylen (PP), bestehen, wobei PVC der bevorzugte Kunststoff ist.

In einer Ausführungsform des vorliegenden Verfahrens wird die Kunststoffträgerplatte zunächst als Endlosstrang durch Extrusion einer Mischung enthaltend PVC, Kalkstein und optionalen Hilfsstoffen hergestellt.

Die zu extrudierende Mischung kann in verschiedenen Alternativen bereitgestellt werden. In einer Variante kann die zu extrudierenden Mischung in Form eines Pulvers vorgelegt werden, wobei die verschiedenen Inhaltsstoffe in einer Mischvorrichtung zu einem pulverförmigen Gemisch vermengt werden, welches nach einer optionalen Zwischenlagerung. in den Extruder eingeführt wird.

In einer anderen Variante wird die Mischung in Form eines Compounds bereitgestellt. Das Compound besteht aus den Einzelkomponenten, die schon einmal zusammen aufgeschmolzen waren und danach zu verarbeitungsfähigen Partikeln (z. B. Pellets) zerkleinert werden, die in die Extrudervorrichtung eingeführt werden. Entsprechend kann bei der Verwendung eines Compounds auf Mischvorrichtung, Zwischenbunker und Schmelzvorrichtung verzichtet werden,

In einer Variante besteht die zu extrudierende Mischung aus 20 - 40 Gew% PVC, bevorzugt 25-35 Gew% PVC, 60-80 Gew% Kalkstein, bevorzugt 65-75 Gew% Kalkstein und optional weitere Hilfsstoffe. In einer bevorzugten Ausführungsform umfasst die zu extrudierende Mischung 65 Gew% Kalkstein (Kreide) und 35 Gew% PVC.

Wenn man von pulverförmigen Rohstoffen ausgeht, sollte die Korngröße des Kalksteins ähnlich wie die Korngröße des PVC-Pulvers sein. Dies erleichtert die Herstellung des Pulvergemischs und vermeidet Entmischungen bzw. Inhomogenitäten. Dies gilt natürlich auch für die Herstellung des Compounds.

Als Hilfsstoffe können Stabilisatoren, Wachse, Schmierstoffe, Trennmittel und weitere Hilfsstoffe zugefügt werden. Ein bevorzugter Stabilisator umfasst Ca-Zn und kann in einer Menge zwischen 1 und 3 Gew%, bevorzugt 2 Gew% der zu extrudierenden Mischung zugegeben werden. Als Wachse können PE-Wachse verwendet werden. Bevorzugt verwendete Trennmittels sind CPE-Trennmittel, die in einer Menge zwischen, 0,5 und 1,5 Gew%, bevorzugt 1 Gew% in der zu extrudierenden Mischung verwendet werden,

Die Abkürzung CPE steht für chlorinated polyethylene, ein Copolymer aus Ethylen und Vinylchlorid. Je nach Verhältnis der beiden Monomeren kann der Chlorgehalt, anders als beim PVC, im Polymer variieren. CPE wird u. a. als Mittel zur Erhöhung der Schlagzähigkeit verwendet.

Die Extrusion der Mischung erfolgt in einem Extruder unter Austragen eines plattenförmigen Stranges. Wie oben angeführt, wird die zu extrudierende Mischung aus PVC, CaCO₃ bzw. Kalkstein und weiteren Zusätzen entweder vorab durch Vermischen der Inhaltsstoffe als Pulver, oder als fertiges Compound bereitgestellt.

Die zu extrudierende Mischung durchläuft anschließend einen mehrstufigen Extruder mit Zonen unterschiedlicher Temperatur, wobei eine teilweise Kühlung mit Wasser erfolgt. Das zu extrudierende Gemisch wird im Extruder unter Temperatur- und Scherkrafteinfluss zu einer "knetbaren" Masse elastifiziert. Aus dem Extruder wird ein plattenförmiger Strang (z.B. mit einer maximalen Breite von 1.400 mm) über eine Schlitzdüse auf eine Rollenbahn ausgetragen und weiter verarbeitet (veredelt). Die Transportgeschwindigkeit des Endlosstranges wird so ausgewählt, dass der Endlosstrang nicht abkühlt, sondern vielmehr noch eine Temperatur aufweist, die ein Aufkalandrieren der folgenden Schichten, insbesondere in Form von thermoplastischen Folien ermöglicht.

In einer bevorzugten Ausführungsform wird als Dekorschicht eine Dekorfolie, insbesondere eine PVC-Dekorfolie, auf die Kunststoffträgerplatte aufgebracht, insbesondere aufkalandriert. Die PVC-Dekorfolie wird separat hergestellt und kann ein Flächengewicht zwischen 60 - 100 mg/m², bevorzugt 80 g/m² aufweisen. Das Aufbringen der PVC-Dekorfolie erfolgt mittels Online-Zuführung der PVC-Dekorfolie (separat hergestellt) von einer Rolle, die auf die Trägerplatte ohne weitere Hilfsstoffe unter Nutzung der in der Trägerplatte vorhandenen Wärmeenergie aufkalandriert wird.

Im Sinne der vorliegenden Anmeldung ist unter dem Begriff des "Kalandrieren" ein Aufbringen einer thermoplastischen Folie auf eine (noch warme) Trägerplatte unter Verwendung von beheizten Walzen zu verstehen. Dabei kommt es zu einem Anschmelzen der Oberfläche der thermoplastischen Folie, die nach dem Aushärten mit der Trägerplatte an der Oberfläche verbunden bzw. mit der Trägerplatte verschweißt ist und dadurch auf der Trägerplatte haftet. Entsprechend ist keine Verleimung notwendig.

Erfindungsgemäß wird auf die Dekorschicht, insbesondere auf die Dekorfolie, mindestens eine Primerschicht aufgebracht. Die Primerschicht enthält Polyurethan. Der Primer auf PU-Basis wird auf die Dekorschicht in einer Menge von 10 oder 15 g/m² flüssig aufgewalzt oder aufgesprüht werden. Die Verwendung einer Primerschicht ist von Vorteil, da eine verbesserte Haftung der anschließend aufgestreuten Partikel und der später aufgebrachten Schichten (Folie oder Lack) erreicht wird.

In einer weiteren Ausführungsform des vorliegenden Verfahrens werden als abriebfeste Partikel, Partikel aus Korund (Aluminiumoxide), Borcarbide, Siliziumdioxide, Siliziumcarbide verwendet. Besonders bevorzugt sind Korundpartikel. Dabei handelt es sich in bevorzugter Weise um Edelkorund (weiß) mit einer hohen Transparenz, damit die optische Wirkung des darunterliegenden Dekors so wenig wie möglich nachteilig beeinflusst wird. Korund weist eine ungleichmäßige Raumform auf.

Die Menge an aufgestreuten abriebfesten Partikeln beträgt 10 bis 50 g/m², bevorzugt 10 bis 30 g/m², insbesondere bevorzugt 15 bis 25 g/m². Die Menge der aufgestreuten abriebfesten Partikel hängt von der zu erreichenden Abriebklasse und der Korngröße ab. So liegt die Menge an abriebfesten Partikeln im Falle der Abriebklasse AC3 im Bereich zwischen 10 bis 15 g/m², in der Abriebklasse AC4 zwischen 15 bis 20 g/m² und in der Abriebklasse AC5 zwischen 20 bis 25 g/m² bei Verwendung der Körnung F220. Im vorliegenden Fall weisen die fertigen Platten bevorzugt die Abriebklasse AC4 auf.

Es werden abriebfeste Partikel mit Körnungen in den Klassen F180 bis F240. Die Korngröße der Klasse F180 umfasst einen Bereich von 53 - 90 µm, F220 von 45-75 µm, F230 34-82 µm, F240 28-70 µm (FEPA Norm). In einer besonders bevorzugten Ausführungsform werden Korundpartikel der Klasse F220 verwendet,

Die abriebfesten Partikel dürfen nicht zu feinkörnig sein (Gefahr der Staubbildung), aber auch nicht zu grobkörnig sein. Die Größe der abriebfesten Partikel stellt somit ein Kompromiss dar.

In einer weitergehenden Ausführungsform können silanisierte Korundpartikel verwendet werden. Typische Silanisierungsmittel sind Aminosilane, Methacrylsilane, monomere oder oligomere Alkylsilane. Die Silanisierung der Korundpartikel ermöglicht eine verbesserte Haftung ("Andocken") der Korundpartikel auf den vorgelegten Schichten, wie Dekorfolie und/oder Primerschicht.

In einer Ausführungsvariante des vorliegenden Verfahrens wird anschließend auf die gestreute Schicht aus abriebfesten Partikel als Abdeckschicht eine Abdeckfolie aus einem thermoplastischen Material, wie PVC, PET oder PU, insbesondere eine transparente PVC-Folie, aufgebracht, insbesondere aufkalandriert. Hierzu kann eine transparente PVC-Folie mit einem Flächengewicht zwischen 40 und 60 g/m², bevorzugt 50g/m² auf den Aufbau aus Trägerplatte, Dekorfolie und abriebfesten Partikel aufkalandriert. Die transparente PVC-Folie wird separat hergestellt und online von einer Rolle zugeführt. Das Kalandrieren erfolgt bevorzugt mit einer mit Temperatur beaufschlagten Strukturwalze. Generell ist auch denkbar, dass eine zum Dekor synchron verlaufende Struktur (EIR) realisiert wird. Demnach kann eine strukturierte Abdeckschicht, bevorzugt strukturierte Abdeckfolie, auf dem Paneel bereitgestellt werden.

Auf die Abdeckfolie kann des Weiteren mindestens eine Lackschicht, insbesondere mindestens eine Polyurethan-Lackschicht zur Verbesserung der Kratzfestigkeit und der Einstellung des Glanzgrades aufgebracht werden. Die Lackschicht kann Nanopartikel, z.B. aus Kieselsäure enthalten. Der Lack, bevorzugt ein PU-Lack oder UV-Lack, kann in einer Menge zwischen 40 und 60 g/m², bevorzugt 50 g/m² mittels weiterer Walzen aufgebracht werden.

In einer alternativen Ausführungsform wird als Abdeckschicht ein Lackaufbau aus mindestens einer Lackschicht und mindestens einem Decklack (anstelle einer Abdeckfolie und ggf. UV-Lack) zur Verbesserung der Kratzfestigkeit aufgebracht. Der Decklack kann Nanopartikel, z.B. aus Kieselsäure enthalten. Es kommen keine lösungsmittelhaltigen Lacke zum Einsatz.

Für die Lackschicht und den Decklack werden insbesondere strahlenhärtbare acrylathaltige Lacke verwendet. Typischerweise enthalten die verwendeten strahlenhärtbaren Lacke (Meth)acrylate, wie zum Beispiel Polyester(meth)acrylate, Polyether(meth)acrylate, Epoxy(meth)acrylate oder Urethan(meth)acrylate. Es ist auch denkbar, dass das verwendete Acrylat bzw. der acrylathaltige Lack substituierte oder unsubstituierte Monomere, Oligomere und/oder Polymere, insbesondere in Form von Acrylsäure-, Acrylether- und/oder Acrylsäureestermonomeren, Oligomeren oder Polymeren vorliegt. Von Bedeutung für das vorliegende Verfahren ist dabei die definitionsgemäße Präsenz eine Doppelbindung bzw. ungesättigten Gruppe im Acrylat-Molekül. Die Polyacrylate können auch weiterhin funktionalisiert vorliegen. Geeignete funktionelle Gruppen sind unter anderem Hydroxy-, Amino-, Epoxy- und/oder Carboxylgruppen. Die genannten Acrylate ermöglichen eine Vernetzung bzw. Aushärtung in Gegenwart von UV- bzw. Elektronenstrahlen (ESH).

Die Lackschicht wird in einer Menge zwischen 50 und 100 g/m², bevorzugt zwischen 60 und 80 g/m² aufgebracht, während der Decklack in einer Menge zwischen 10 und 30 g/m², bevorzugt 30 g/m² aufgebracht wird. Der Lackaufbau kann aus mindestens einer ESH-Lackschicht bestehen, die nach Auftrag mit einem ESH-Strahler angeliert wird, und mindestens einem Decklack, der nach Auftrag mit Excimer-Strahler angehärtet wird. Der gesamte Lackaufbau wird abschließend mit einem ESH-Strahler durchgehärtet. Anstelle des beschriebenen Lackaufbaus kann auch ein Hot-Coating-Auftrag (z.B. PU-Lack) zur Abdeckung der abriebfesten Partikel verwendet werden.

Es ist auch möglich und denkbar, dass in den Lackaufbau als Abdecksschicht eine Struktur unter Verwendung einer strukturgebenden Walze oder eines mechanischen Presselementes (Pressvorrichtung) eingebracht wird.

In einer weiteren Ausführungsform kann ein Gegenzug, insbesondere zur Trittschalldämmung, auf die Unterseite der Kunststoffträgerplatte aufgebracht, insbesondere aufkaschiert werden.

Im weiteren Verfahrensablauf wird der mehrlagige Aufbau aus Kunststoffträgerplatte, Dekorschicht, abriebfesten Partikeln, Abdeckschicht und ggf. Gegenzug abgekühlt, z.B. unter Verwendung eines Gebläses oder eines Wasserbades, und anschließend zugeschnitten (Ablängen), wobei der Zuschnitt abgestimmt ist auf eine Paneellänge zur Erstellung von Halbformaten, die Dekor auf Dekor aufeinander abgelegt und gestapelt werden. Es ist weiterhin möglich, dass die Oberfläche der Halbformate mit UV-Lack zur weiteren Einstellung des Abriebs und/oder des Glanzgrades ablackiert wird. In weiteren Ablauf werden die Halbformate in Paneele z.B. durch Stanzen aufgeteilt.

Die Paneele können längs und quer auf Fräsautomaten profiliert werden, jedoch separat, um die Fräsabfälle wiederverwerten zu können.

Optional ist das Paneel in Längs- und/oder Querrichtung mit einer V-Fuge versehen, die lackiert wird.

In einer weiteren Ausführungsform des vorliegenden Verfahrens wird an zumindest zwei einander gegenüberliegenden Kanten des Paneels eine verriegelbare Nut-Feder-Verbindung eingebracht. Dies ermöglicht eine einfache und schnelle schwimmende Verlegung der Paneele. Derartige Nut-Feder-Verbindungen sind u.a. aus der EP 1 084 317 B1 bekannt.

Mit dem vorliegenden Verfahren ist somit die Herstellung eines abriebfesten und wasserfesten mehrlagigen Paneels möglich, welches den folgenden Aufbau (von unten nach oben) aufweist:
- mindestens eine Kunststoffträgerplatte, insbesondere eine PVC-Trägerplatte;
- mindestens eine Dekorschicht auf der mindestens einen Kunststoffträgerplatte;
- mindestens eine Primerschicht aus Polyurethan auf der mindestens einen Dekorschicht;
- mindestens eine Lage von aufgestreuten abriebfesten Partikeln auf der mindestens einen auf der Dekorschicht aufgebrachten Primerschicht; und
- mindestens eine Abdeckschicht,
- wobei die mindestens eine Kunststoffträgerplatte und die darauf aufgebrachten Schichten mittels Kalandrieren miteinander verbunden sind.

Die abriebfesten und wasserfesten Paneele weisen eine Rohdichte zwischen 1500 und 3000 kg/m³, bevorzugt 2000 und 2500 kg/m³ auf. Die Gesamtschichtdicke der Paneele liegt unter 6 mm, zwischen 4 und 6 mm, bevorzugt 4 und 5 mm.

In einer weiteren zweiten Ausführungsvariante kann das mehrlagige Paneel den folgenden Schichtaufbau aufweisen:
- mindestens eine Kunststoffträgerplatte, insbesondere eine PVC-Trägerplatte;
- mindestens eine Dekorfolie als Dekorschicht auf der mindestens einen Kunststoffträgerplatte;
- mindestens eine Primerschicht auf der Dekorfolie;
- mindestens eine Lage von aufgestreuten abriebfesten Partikeln auf der mindestens einen Primerschicht; und
- mindestens eine Abdeckfolie als Abdeckschicht.

Auch kann in den angeführten obigen Ausführungsformen des Paneels die Abdeckfolie strukturiert vorliegen. So kann die Abdeckfolie bevorzugt eine zum Dekor synchron verlaufende Struktur (EIR) aufweisen.

In den obigen Ausführungsvarianten des Paneels kann zusätzlich auf der Abdeckfolie noch eine Lackschicht (UV-Lack) zur Verbesserung der Kratzfestigkeit und zur Einstellung des Glanzgrades vorgesehen sein.

In einer noch weiteren Ausführungsvariante weist das mehrlagige Paneel den folgenden Schichtaufbau auf:
- mindestens eine Kunststoffträgerplatte, insbesondere eine PVC-Trägerplatte;
- mindestens eine Dekorfolie als Dekorschicht auf der mindestens einen Kunststoffträgerplatte;
- mindestens eine Primerschicht auf der Dekorfolie;
- mindestens eine Lage von aufgestreuten abriebfesten Partikeln auf der mindestens einen Primerschicht; und
- mindestens ein Lackaufbau aus mindestens einer Lackschicht und mindestens einem Decklack als Abdeckschicht.

Die Produktionslinie zur Durchführung des vorliegenden Verfahrens umfasst folgende Elemente:
- mindestens eine Extrudervorrichtung zum Bereitstellen einer Kunststoffträgerplatte, insbesondere als Endlosstrang;
- mindestens eine Vorrichtung zum Aufbringen von mindestens einer Dekorschicht auf die mindestens einer Kunststoffträgerplatte;
- mindestens eine in Verarbeitungsrichtung hinter der mindestens einen Vorrichtung zum Aufbringen von mindestens einer Dekorschicht angeordnete Vorrichtung zum Auftragen von mindestens einer Primerschicht auf die Dekorschicht und mindestens eine Vorrichtung zum Aufstreuen einer vorbestimmten Menge an abriebfesten Partikeln; und
- mindestens eine in Verarbeitungsrichtung hinter der Streuvorrichtung angeordnete Vorrichtung zum Aufbringen von mindestens einer Abdeckschicht auf die aufgestreuten abriebfesten Partikel.

In einer Variante der vorliegenden Produktionslinie ist mindestens eine Mischvorrichtung zum Vermischen der Ausgangsstoffe für die Kunststoffträgerplatte in Verarbeitungsrichtung vor der Extrudervorrichtung vorgesehen. In der Mischvorrichtung werden der thermoplastische Kunststoff, insbesondere PVC, Kalkstein und weitere Zusätze miteinander vermischt.

In einer weitergehenden Variante umfasst die Produktionslinie mindestens einen in Verarbeitungsrichtung hinter der Mischvorrichtung angeordneten Zwischenbunker zur Lagerung der Mischung aus Kunststoff, Kalkstein und weiteren Zusätzen. An den Zwischenbunker schließt sich in Verarbeitungsrichtung die Extrudiervorrichtung an.

Es ist auch möglich, auf die Mischvorrichtung und Zwischenbunker zu verzichten. In diesem Fall wird ein fertiges Compound aus den Ausgangsstoffen (z.B. in Form von Pellets) bereitgestellt und in den Extruder eingeführt.

Die Mischung wird in die Extrudervorrichtung zugeführt, im Extruder. Scherkräften ausgesetzt, dabei elastifiziert und durch ein Profil zur Ausbildung eines Endlosstranges (SPC-Strang) gepresst.

Der Extrudervorrichtung schließt sich in Verarbeitungsrichtung die mindestens eine Vorrichtung zum Aufbringen einer Dekorschicht, insbesondere in Form einer Dekorfolie, an. Bevorzugt wird die Dekorfolie über eine Rolle kontinuierlich online zugeführt und unter Verwendung eines Kalanders oder einer Kalandriervorrichtung (bestehend aus mindestens einer Rolle) auf den noch warmen Endlosstrang aufkalandriert.

Erfindungsgemäß ist in Verarbeitungsrichtung hinter der Vorrichtung zum Aufbringen einer Dekorschicht mindestens eine Auftragsvorrichtung, insbesondere in Form einer Walzenauftragsvorrichtung oder eines Sprühaggregates, zum Auftragen einer Primerschicht auf die Dekorschicht vorgesehen.

Die in der vorliegenden Produktionslinie vorgesehene Streuvorrichtung für die abriebfesten Partikel ist geeignet zum Streuen von Pulver, Granula, Fasern und umfasst ein oszillierendes Bürstensystem. Die Streuvorrichtung besteht im Wesentlichen aus einem Vorratstrichter, einer sich drehenden, strukturierten Walze und einem Abstreifer. Dabei wird über die Drehgeschwindigkeit der Walze die Auftragsmenge an abriebfesten Material bestimmt. Die Streuvorrichtung umfasst bevorzugt eine Stachelwalze.

In einer Ausführungsform der vorliegenden Produktionslinie ist zudem vorgesehen, dass die mindestens eine Streuvorrichtung von mindestens einer Kabine, die mit mindestens einem Mittel zum Entfernen von in der Kabine auftretenden Stäuben versehen ist, umgeben ist bzw. in dieser angeordnet ist. Das Mittel zum Entfernen der Stäube kann in Form einer Absaugvorrichtung oder auch als Vorrichtung zum Einblasen von Luft ausgebildet sein. Das Einblasen von Luft kann über Düsen erreicht werden, die am Plattenein- und auslauf installiert sind und Luft in die Kabine einblasen. Zusätzlich können diese verhindern, dass durch Luftbewegungen ein inhomogener Streuvorhang an abriebfesten Material entsteht.

Die Entfernung des Staubes aus abriebfesten Material aus der Umgebung der Streuvorrichtung ist vorteilhaft, da neben der offensichtlich gesundheitlichen Belastung für die an der Produktionslinie tätigen Arbeiter der Feinstaub aus abriebfesten Partikeln sich auch auf anderen Anlagenteilen der Produktionslinie ablegt und zu erhöhten Verschleiß der selbigen führt. Die Anordnung der Streuvorrichtung in einer Kabine dient daher nicht nur der Reduzierung der gesundheitlichen Staubbelastung der Umgebung der Produktionslinie, sondern beugt auch einem vorzeitigen Verschleiß vor.

Der Streuvorrichtung schließt sich in Verarbeitungsrichtung die Vorrichtung zum Aufbringen der mindestens einen Abdeckschicht an. In Abhängigkeit von der Art der aufzubringenden Abdeckschicht ist diese Vorrichtung unterschiedlich ausgebildet.

Wird als Abdeckschicht eine transparente PVC-Folie verwendet, wird die PVC-Folie von einer Rolle kontinuierlich online zugeführt und unter Verwendung eines Kalanders oder einer Kalandriervorrichtung auf die auf die Dekorschicht aufgestreuten abriebfesten Partikel aufkalandriert. Die hierfür verwendete Strukturwalze ist temperiert und ermöglicht eine gleichzeitige Strukturierung und Kalandrierung der PVC-Folie. Es kann sich der Auftrag eines UV-Lackes zum Einstellen des Glanzgrades mittels einer geeigneten Walzvorrichtung anschließen.

Wird als Abdeckschicht ein Lackaufbau aus mindestens einer Lackschicht und mindestens einem Decklack verwendet, erfolgt der Auftrag der Lackschicht(en) unter Verwendung eines Auftragswerkes, insbesondere in Form eines einseitigen Auftragswerkes. Dem Auftragswerk schließen sich in Verarbeitungsrichtung Vorrichtungen zum Aushärten des Lackaufbaus, insbesondere ESH-Strahler und Excimer-Strahler an.

Zur weiteren Konfektionierung sind geeignete Kühlungsvorrichtungen und Schneidvorrichtungen in vorgesehen.

Die Erfindung wird nachfolgend unter Bezugnahme auf die Figuren der Zeichnungen an einem Ausführungsbeispiel näher erläutert. Es zeigen:
- Figur 1: eine schematische Darstellung einer Produktionslinie eines mehrlagigen Paneels gemäß einer ersten Ausführungsform des erfindungsgemäßen Verfahrens; und
- Figur 2: eine schematische Darstellung einer Produktionslinie eines mehrlagigen Paneels gemäß einer zweiten Ausführungsform des erfindungsgemäßen Verfahrens.

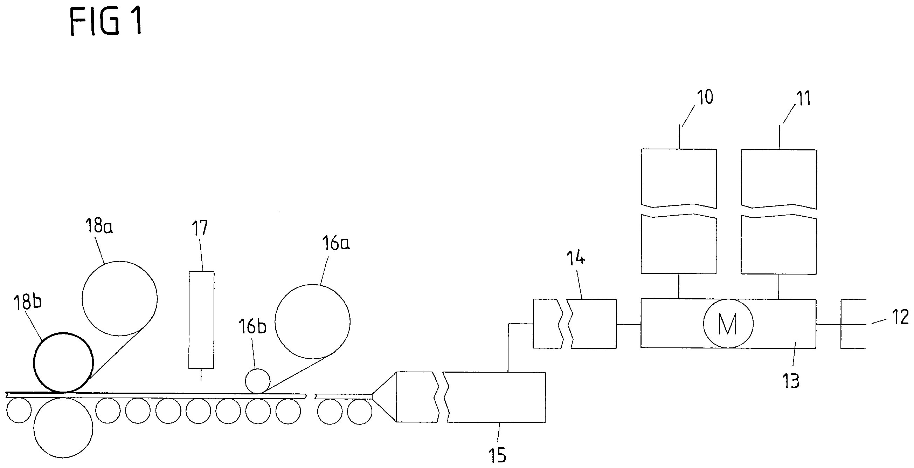

Die in Figur 1 schematisch dargestellte Produktionslinie umfasst einen Vorratsbehälter 10 für PVC-Pulver und einen Vorratsbehälter 11 für Kalkstein, die in der Mischvorrichtung 13 unter Zugabe von weiteren Hilfsstoffen 12 miteinander vermischt werden.

Diese pulverförmige Mischung aus PVC, Kalkstein (oder Kreide) und weiteren Zusätzen kann in einem Zwischenbunker 14 zwischengelagert werden. Der Zwischenbunker 14 ist in Verarbeitungsrichtung hinter der Mischvorrichtung angeordnet.

Wie bereits diskutiert, kann auch direkt ein Compound aus den Einzelkomponenten in Pellet-Form als Ausgangskomponente für den Extruder 15 verwendet werden. In diesem Fall kann auf Vorratsbehälter 10, 11, 12, Mischvorrichtung 13, und Zwischenbunker 14 verzichtet werden.

Die Mischung (Pulver oder Compound) wird in die Extrudervorrichtung 15 zugeführt und durch ein Profil zur Ausbildung eines Endlosstranges (SPC-Strang) gepresst. Die Extrudervorrichtung 15 ist als mehrstufiger Extruder mit Zonen unterschiedlicher Temperatur ausgebildet, wobei eine teilweise Kühlung mit Wasser erfolgt. Aus dem Extruder wird ein plattenförmiger Strang (z.B. mit einer maximalen Breite von 1.400 mm) über eine Schlitzdüse auf eine Rollenbahn ausgetragen und weiter verarbeitet.

Der Extrudervorrichtung 15 schließt sich in Verarbeitungsrichtung eine Vorrichtung zum Aufbringen einer PVC-Dekorfolie an. Diese Vorrichtung umfasst eine Rolle 16a, über welche die PVC-Dekorfolie online zugeführt wird, und eine Kalandrierrolle 16b, über die die PVC-Dekorfolie auf den noch warmen Endlosstrang aufkalandriert wird.

Nach der Auftragsvorrichtung 16a,16b für die PVC-Dekorfolie ist eine erste Streuvorrichtung 17 zum gleichmäßigen Aufstreuen des abriebfesten Materials wie z.B. Korund auf die Dekorfolie auf der Oberseite der Kunststoffträgerplatte vorgesehen. Als abriebfestes Material wird der Korund F220 eingesetzt, welches nach FEPA-Norm etwa 45-75 µm im Durchmesser misst.

Die Streuvorrichtung 17 besteht im Wesentlichen aus einem Vorratstrichter, einer sich drehenden, strukturierten Stachelwalze und einem Abstreifer. Dabei wird über die Drehgeschwindigkeit der Streuwalze, die Auftragsmenge des Materials bestimmt. Auf die Platte wird je nach geforderter Abriebklasse des Produktes zwischen 12-25g/m² Korund aufgestreut (AC4 (nach EN 13329) = 20 g/m²). Von der Stachelwalze aus fällt der Korund in einem Abstand von 5 cm auf die mit der Dekorfolie versehene Platte.

Der Streuvorrichtung 17 schließt sich in Verarbeitungsrichtung die Vorrichtung zum Aufbringen einer transparenten PVC-Folie als Abdeckschicht an. Auch diese Vorrichtung umfasst eine Rolle 18a, über welche die transparente PVC-Abdeckfolie online zugeführt wird, und eine Kalandrierrolle 18b, über die die transparente PVC-Abdeckfolie aufkalandriert wird. Die verwendete Kalandrierrolle 18b ist temperiert und als Strukturwalze ausgebildet, so dass eine gleichzeitige Strukturierung und Kalandrierung der PVC-Abdeckfolie möglich ist.

Wird als Abdeckschicht ein Lackaufbau verwendet, erfolgt der Auftrag der Lackschicht(en) unter Verwendung eines Auftragswerkes. Dem Auftragswerk schließen sich in Verarbeitungsrichtung Vorrichtungen zum Aushärten des Lackaufbaus, insbesondere ESH-Strahler und Excimer-Strahler an (nicht gezeigt).

Zur weiteren Konfektionierung sind geeignete Kühlungsvorrichtungen und Schneidvorrichtung in vorgesehen (nicht gezeigt).

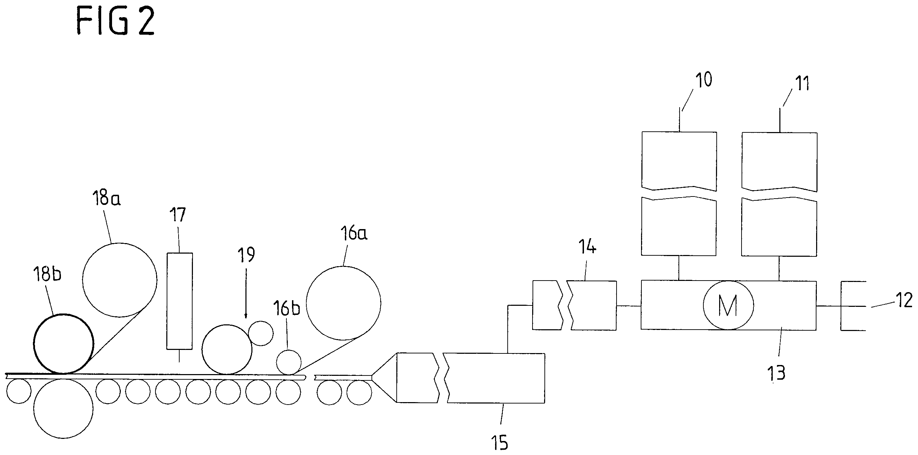

Die in Figur 2 dargestellte Produktionslinie umfasst zusätzlich zu den in Figur 1 gezeigten und oben beschriebenen Elementen und Vorrichtungen ein Auftragswerk 19 zum Aufbringen einer PU-Primerschicht auf die PVC-Dekorfolie. Das Auftragswerk 19 ist in Verarbeitungsrichtung hinter der Vorrichtung zum Aufbringen der PVC-Dekorfolie vorgesehen und kann als Walzenauftragsvorrichtung oder Sprühaggregat ausgebildet sein.

### Ausführungsbeispiel 1 (nicht erfindungsgemäß):

In einem Extruder wurde ein Compound aus ca. 65 Gew% Kreide und 35 Gew% PVC bei ca. 140°C aufgeschmolzen. In dem Compound waren die üblichen Hilfsstoffe wie Gleitmittel, Antioxidantien usw. enthalten. Das Compound wurde durch ein Profil mit den Abmessungen 1300 x 4 mm unter gleichzeitigem Kühlen gepresst.

Dann wurde in einem ersten Schritt eine Dekorfolie aufkalandriert. Es handelte sich dabei um eine PVC-Folie (ca. 80 g/m² Flächengewicht ), die mit einem Holzdekor bedruckt war.

Hierauf wurde dann mit Hilfe eines Streuers ein mit einem oligomeren Alkylsilan modifiziertes Korund aufgestreut (15 g Korund /m², Korngröße: F 220). Darauf wurde eine transparente PVC-Folie (Flächengewicht: 50 g/m²) aufkalandriert.

Zum Vergleich wurde ein Muster ohne Korund, aber mit einer transparenten PVC-Folie (Flächengewicht: 96 g/m²) hergestellt.

Beide transparenten Folien wurden beim Aufkalandrieren durch eine strukturierte Kalandrierwalze strukturiert. Danach wird der Endlosstrang auf Format geschnitten. Auf beide Muster wurde noch zur Verbesserung der Kratzfestigkeit ein PU-Lack (30 g Lack/m²) oder UV-Lack aufgebracht und gehärtet.

Bei beiden Mustern wurde dann die Abriebfestigkeit gemäß der DIN EN 13329, Anhang E geprüft. Beide Proben erreichten die Nutzungsklasse 34 (>4000 Um).

### Ausführunasbeispiel 2 (erfindungsgemäß):

In einem Extruder wurde ein Compound aus ca. 65 Gew% Kreide und 35 Gew% PVC bei ca. 140°C aufgeschmolzen. In dem Compound waren die üblichen Hilfsstoffe wie Gleitmittel, Antioxidantien usw. enthalten. Das Compound wurde durch ein Profil mit den Abmessungen 1300 x 4 mm unter gleichzeitigem Kühlen gepresst.

Dann wurde in einem ersten Schritt eine Dekorfolie aufkalandriert. Es handelte sich dabei um eine PVC-Folie (ca. 80 g/m² Flächengewicht), die mit einem Holzdekor bedruckt war.

Auf die Dekorfolie wurde dann ein Primer auf PU-Basis (ca. 15 g / m², flüssig) aufgewalzt oder aufgesprüht.

Hierauf wurde dann mit Hilfe eines Streuers ein mit einem oligomeren Alkylsilan modifiziertes Korund eingestreut (15 g Korund /m², Korngröße: F 220). Darauf wurde eine transparente PVC-Abdeckfolie (Flächengewicht: 50 g/m²) aufkalandriert.

Zum Vergleich wurde ein Muster ohne Primer und Korund, aber mit einer transparenten PVC-Folie (Flächengewicht: 96 g/m²) hergestellt.

Beide transparenten Folien wurden beim Aufkalandrieren durch eine strukturierte Kalandrierwalze strukturiert. Danach wird der Endlosstrang auf Format geschnitten. Auf beide Muster wurde noch zur Verbesserung der Kratzfestigkeit ein PU-Lack (30 g Lack/m²) oder UV-Lack aufgebracht und gehärtet.

Bei beiden Mustern wurde dann die Abriebfestigkeit gemäß der DIN EN 13329, Anhang E geprüft. Beide Proben erreichten die Nutzungsklasse 34 (>4000 Um).

### Ausführunasbeispiel 3 (erfindungsgemäß):

In einem Extruder wurde ein Compound aus ca. 65 Gew% Kreide und 35 Gew% PVC bei ca. 140°C aufgeschmolzen. In dem Compound waren die üblichen Hilfsstoffe wie Gleitmittel, Antioxidantien usw. enthalten. Das Compound wurde durch ein Profil mit den Abmessungen 1300 x 4 mm unter gleichzeitigem Kühlen gepresst.

Dann wurde in einem ersten Schritt eine Dekorfolie aufkalandriert. Es handelte sich dabei um eine PVC-Folie (ca. 80 g/m² Flächengewicht), die mit einem Holzdekor bedruckt war.

Auf die Folie wurde dann ein Primer auf PU-Basis (ca. 15 g / m², flüssig) aufgewalzt oder aufgesprüht. In den Primer wurde dann mit Hilfe eines Streuers ein mit einem Methacrylsilan modifiziertes Korund eingestreut (15 g Korund /m², Korngröße: F 220).

Anschließend wird der Endlosstrang entweder auf Format getrennt oder als Endlosstrang weiterverarbeitet. Auf die Oberfläche wurde ein Lackaufbau aufgebracht, der aus einem ESH-Lack (60 g/m²) und einem Decklack zur Verbesserung der Kratzfestigkeit auf UV-Basis (20 g/m²) bestand. Der erste Lack wurde mit einem ESH-Strahler angeliert. Der Decklack wurde mit einem Excimer-Strahler gehärtet, wobei sich eine matte Oberfläche einstellte (< 5 Glanzpunkte). Der Gesamtaufbau wurde dann mit einem ESH-Strahler durchgehärtet.

Zum Vergleich wurde ein Muster mit einem Primer, einem ESH-Lack (120 g/m²) und einem Decklack zur Verbesserung der Kratzfestigkeit ebenfalls auf UV-Basis (20 g/m²) hergestellt. Der erste UV-Lack wurde mit einem ESH-Strahler angeliert und dann der Decklack aufgetragen. Dieser wurde mit einem Excimer- Strahler gehärtet, wodurch eine matte Oberfläche erzeugt wurde (< 5 Glanzpunkte). Der Gesamtaufbau wurde dann mit einem ESH-Strahler durchgehärtet.

Bei beiden Mustern wurde dann die Abriebfestigkeit gemäß der DIN EN 15468: 2013 Anhang A geprüft. Beide Proben erreichten die Nutzungsklasse 34 (> 7000 Um).

Natürlich können als Abdeckung für die Korundpartikel auch andere Folientypen zum Einsatz kommen wie z. B. PET, PU usw. Neben einer Lackierung kann auch ein Hotcoating-Auftrag zur Abdeckung eingesetzt werden.

## Patentansprüche

1. Verfahren zur Herstellung eines abrieb- und wasserfesten mehrlagigen Paneels, insbesondere eines abrieb- und wasserfesten Fußbodenpaneels, umfassend die Schritte:
- Bereitstellen von mindestens einer Kunststoffträgerplatte, insbesondere einer PVC- Trägerplatte;
- Aufbringen von mindestens einer Dekorschicht auf die mindestens eine Kunststoffträgerplatte;
- Aufbringen von mindestens einer Primerschicht aus Polyurethan auf die mindestens eine Dekorschicht, wobei der Polyurethan-Primer in einer Menge von 10 g/m² oder von 15 g/m² flüssig aufgewalzt oder aufgesprüht wird;
- gleichmäßiges Aufstreuen von abriebfesten Partikeln auf die mindestens eine auf der Dekorschicht aufgebrachten Primerschicht;
- Aufbringen von mindestens einer Abdeckschicht.

2. Verfahren nach Anspruch 1, **dadurch gekennzeichnet, dass** die Kunststoffträgerplatte als Endlosstrang bereitgestellt wird und nach der Beschichtung auf Format geschnitten wird.

3. Verfahren nach einem der vorhergehenden Ansprüche, **dadurch gekennzeichnet, dass** die Kunststoffträgerplatte durch Extrusion einer Mischung enthaltend PVC, Kalkstein und optionalen Hilfsstoffen hergestellt wird.

4. Verfahren nach Anspruch 3, **dadurch gekennzeichnet, dass** die zu extrudierende Mischung 20 - 40 Gew% PVC, bevorzugt 25-35 Gew% PVC, 60-80 Gew% Kalkstein, bevorzugt 65-75 Gew% Kalkstein und optional weitere Hilfsstoffe enthält.

5. Verfahren nach einem der vorhergehenden Ansprüche, **dadurch gekennzeichnet, dass** als Dekorschicht eine Dekorfolie, insbesondere eine PVC-Dekorfolie, auf die Kunststoffträgerplatte aufgebracht wird, insbesondere aufkalandriert wird.

6. Verfahren nach einem der vorhergehenden Ansprüche, **dadurch gekennzeichnet, dass** auf die Dekorfolie mindestens eine Primerschicht aufgebracht wird.

7. Verfahren nach einem der vorhergehenden Ansprüche, **dadurch gekennzeichnet, dass** als abriebfeste Partikel Partikel aus Korund (Aluminiumoxide), Borcarbide, Siliziumdioxide, Siliziumcarbide verwendet werden.

8. Verfahren nach einem der vorhergehenden Ansprüche, **dadurch gekennzeichnet, dass** als Abdeckschicht eine Abdeckfolie, insbesondere eine transparente PVC-Abdeckfolie, aufgebracht wird, insbesondere aufkalandriert wird.

9. Verfahren nach Anspruch 8, **dadurch gekennzeichnet, dass** auf die Abdeckfolie mindestens eine Lackschicht, insbesondere mindestens eine Polyurethan-Lackschicht zur Verbesserung der Kratzfestigkeit und zur Einstellung des Glanzgrades aufgebracht wird.

10. Verfahren nach einem der Ansprüche 1 - 7, **dadurch gekennzeichnet, dass** als Abdeckschicht ein Lackaufbau aus mindestens einer Lackschicht und mindestens einem Decklack aufgebracht wird.

11. Verfahren nach einem der vorhergehenden Ansprüche, **dadurch gekennzeichnet, dass** in die Abdeckschicht eine Struktur unter Verwendung einer strukturgebenden Walze oder eines mechanischen Presselementes (Pressvorrichtung) eingebracht wird.

12. Verfahren nach einem der vorhergehenden Ansprüche, **dadurch gekennzeichnet, dass** an zumindest zwei einander gegenüberliegenden Kanten des Paneels eine verriegelbare Nut-Feder-Verbindung eingebracht wird.

13. Abriebfeste und wasserfestes mehrlagiges Paneel herstellbar in einem Verfahren nach einem der vorhergehenden Ansprüche umfassend:
- mindestens einer Kunststoffträgerplatte, insbesondere einer PVC-Trägerplatte;
- mindestens eine Dekorschicht auf der mindestens einen Kunststoffträgerplatte;
- mindestens eine Primerschicht aus Polyurethan auf der mindestens einen Dekorschicht;
- mindestens eine Lage von abriebfesten Partikeln auf der mindestens einen auf der Dekorschicht aufgebrachten Primerschicht; und
- mindestens eine Abdeckschicht, wobei
- die mindestens eine Kunststoffträgerplatte und die darauf aufgebrachten Schichten mittels Kalandrieren miteinander verbunden sind.

14. Produktionslinie zur Durchführung eines Verfahrens nach einem der Ansprüche 1-12 umfassend
- mindestens eine Extrudervorrichtung zum Bereitstellen einer Kunststoffträgerplatte, insbesondere in Form eines Endlosstranges;
- mindestens eine Vorrichtung zum Aufbringen von mindestens einer Dekorschicht auf die mindestens einer Kunststoffträgerplatte;
- mindestens eine in Verarbeitungsrichtung hinter der mindestens einen Vorrichtung zum Aufbringen von mindestens einer Dekorschicht angeordnete Vorrichtung zum Auftragen von mindestens einer Primerschicht auf die Dekorschicht und mindestens eine Vorrichtung zum Aufstreuen einer vorbestimmten Menge an abriebfesten Partikeln; und
- mindestens eine in Verarbeitungsrichtung hinter der Streuvorrichtung angeordnete Vorrichtung zum Aufbringen von mindestens einer Abdeckschicht auf die aufgestreuten abriebfesten Partikel.

## Claims

1. A method of manufacturing an abrasion and water resistant multilayer panel, in particular an abrasion and water resistant floor panel, comprising the steps of:
- Providing at least one plastic carrier plate, in particular a PVC carrier plate;
- Applying at least one decorative layer to the at least one plastic carrier plate;
- Applying at least one primer layer of polyurethane to the at least one decorative layer, the polyurethane primer being rolled on or sprayed on in liquid form in an amount of 10 g/m² or of 15 g/m²;
- uniform scattering of abrasion-resistant particles onto the at least one primer layer applied to the decorative layer;
- Applying at least one cover layer.

2. Method according to claim 1, **characterized in that** the plastic carrier plate is provided as a continuous strand and is cut to size after coating.

3. Method according to any one of the preceding claims, **characterized in that** the plastic carrier plate is produced by extrusion of a mixture comprising PVC, limestone and optional auxiliary materials.

4. Method according to claim 3, **characterized in that** the mixture to be extruded contains 20-40 wt% PVC, preferably 25-35 wt% PVC, 60-80 wt% limestone, preferably 65-75 wt% limestone, and optionally other auxiliaries.

5. Method according to one of the preceding claims, **characterized in that** a decorative film, in particular a PVC decorative film, is applied as the decorative layer to the plastic carrier plate, in particular by calendering.

6. Method according to one of the preceding claims, **characterized in that** at least one primer layer is applied to the decorative film.

7. Method according to any of the preceding claims, **characterized in that** particles of corundum (aluminum oxides), boron carbides, silicon dioxides, silicon carbides are used as abrasion-resistant particles.

8. Method according to one of the preceding claims, **characterized in that** a cover film, in particular a transparent PVC cover film, is applied as cover layer, in particular calendered on.

9. Method according to claim 8, **characterized in that** at least one lacquer layer, in particular at least one polyurethane lacquer layer, is applied to the cover film to improve the scratch resistance and to adjust the gloss level.

10. Method according to one of the claims 1 - 7, **characterized in that** a paint structure comprising at least one paint layer and at least one top coat is applied as a covering layer.

11. Method according to one of the preceding claims, **characterized in that** a structure is introduced into the cover layer using a structure-imparting roller or a mechanical pressing element (pressing device).

12. Method according to any one of the preceding claims, **characterized in that** a lockable tongue-and-groove joint is introduced at at least two opposite edges of the panel.

13. Abrasion-resistant and waterproof multilayer panel producible in a method according to any one of the preceding claims comprising:
- at least one plastic carrier plate, in particular a PVC carrier plate;
- at least one decorative layer on the at least one plastic carrier plate;
- at least one primer layer of polyurethane on the at least one decorative layer;
- at least one layer of abrasion-resistant particles on the at least one primer layer applied to the decorative layer; and
- at least one cover layer, wherein
- the at least one plastic carrier plate and the layers applied thereto are bonded together by means of calendering.

14. Production line for carrying out a method according to any one of the claims 1-12 comprising
- at least one extruder device for providing a plastic carrier plate, in particular in the form of a continuous strand;
- at least one device for applying at least one decorative layer to the at least one plastic carrier plate;
- at least one device arranged downstream of the at least one device for applying at least one decorative layer for applying at least one primer layer to the decorative layer and at least one device for scattering a predetermined amount of abrasion-resistant particles; and
- at least one device arranged downstream of the spreading device in the processing direction for applying at least one covering layer to the spread abrasion-resistant particles.

## Revendications

1. Procédé de fabrication d'un panneau à plusieurs couches résistant à l'abrasion et à l'eau, en particulier d'un panneau de plancher résistant à l'abrasion et à l'eau, comprenant les étapes :
- la fourniture d'au moins une plaque de support en matière plastique, en particulier d'une plaque de support en PVC ;
- l'application d'au moins une couche décorative sur l'au moins une plaque de support en matière plastique ;
- l'application d'au moins une couche primaire en polyuréthane sur l'au moins une couche décorative, la couche primaire en polyuréthane étant laminée ou pulvérisée de manière liquide dans une quantité de 10 g/m² ou de 15 g/m² ;
- l'épandage uniforme de particules résistantes à l'abrasion sur l'au moins une couche primaire appliquée sur la couche décorative ;
- l'application d'au moins une couche de recouvrement.

2. Procédé selon la revendication 1, **caractérisé en ce que** la plaque de support en matière plastique est fournie en tant que brin continu et est coupée au format après le revêtement.

3. Procédé selon l'une des revendications précédentes, **caractérisé en ce que** la plaque de support en matière plastique est fabriquée par extrusion d'un mélange contenant du PVC, du calcaire et des substances accessoires optionnelles.

4. Procédé selon la revendication 3, **caractérisé en ce que** le mélange à extruder contient 20 à 40 % en poids de PVC, de préférence 25 à 35 % en poids de PVC, 60 à 80 % en poids de calcaire, de préférence 65 à 75 % en poids de calcaire et en option d'autres substances accessoires.

5. Procédé selon l'une des revendications précédentes, **caractérisé en ce qu'**en tant que couche décorative un film décoratif, en particulier un film décoratif en PVC, est appliqué sur la plaque de support en matière plastique, en particulier calandré.

6. Procédé selon l'une des revendications précédentes, **caractérisé en ce qu'**au moins une couche primaire est appliquée sur le film décoratif.

7. Procédé selon l'une des revendications précédentes, **caractérisé en ce qu'**en tant que particules résistantes à l'abrasion des particules de corindon (oxydes d'aluminium), carbure de bore, dioxyde de silicium, carbure de silicium sont utilisées.

8. Procédé selon l'une des revendications précédentes, **caractérisé en ce qu'**en tant que couche de recouvrement un film de recouvrement, en particulier un film de recouvrement en PVC transparent, est appliqué, en particulier est calandré.

9. Procédé selon la revendication 8, **caractérisé en ce que** sur la couche de recouvrement au moins une couche de vernis, en particulier une couche de vernis de polyuréthane est appliquée pour l'amélioration de la résistance aux rayures et pour le réglage du degré de brillance.

10. Procédé selon l'une des revendications 1 à 7, **caractérisé en ce qu'**en tant que couche de recouvrement une structure de vernis composée d'au moins une couche de vernis et d'au moins une couche de recouvrement est appliquée.

11. Procédé selon l'une des revendications précédentes, **caractérisé en ce qu'**une structure est introduite dans la couche de recouvrement en utilisant un rouleau de formation de structure ou un élément de pressage mécanique (dispositif de pressage).

12. Procédé selon l'une des revendications précédentes, **caractérisé en ce qu'**une liaison à languette et rainure verrouillable est introduite au niveau d'au moins deux bords opposés du panneau.

13. Panneau à plusieurs couches résistant à l'abrasion et résistant à l'eau pouvant être fabriqué dans un procédé selon l'une des revendications précédentes, comprenant :
- au moins une plaque de support en matière plastique, en particulier une plaque de support en PVC ;
- au moins une couche décorative sur l'au moins une plaque de support en matière plastique ;
- au moins une couche primaire en polyuréthane sur l'au moins une couche décorative ;
- au moins une couche de particules résistantes à l'abrasion sur l'au moins une couche primaire appliquée sur la couche décorative ; et
- au moins une couche de recouvrement, dans lequel
- l'au moins une couche de support en matière plastique et les couches appliquées sur celle-ci sont reliées entre elles par calandrage.

14. Ligne de production pour la réalisation d'un procédé selon l'une des revendications 1 à 12 comprenant
- au moins un dispositif d'extrudeuse pour la fourniture d'une plaque de support en matière plastique, en particulier sous la forme d'un brin continu ;
- au moins un dispositif pour l'application d'au moins une couche décorative sur l'au moins une plaque de support en matière plastique ;
- au moins un dispositif agencé dans le sens de traitement derrière l'au moins un dispositif pour l'application d'au moins une couche décorative pour l'application d'au moins une couche primaire sur la couche décorative et au moins un dispositif pour l'épandage d'une quantité prédéterminée de particules résistantes à l'abrasion ; et
- au moins un dispositif agencé dans le sens de traitement derrière le dispositif d'épandage pour l'application d'au moins une couche de recouvrement sur les particules résistantes à l'abrasion épandues.
